# FASCICULE DE BREVET EUROPEEN

(11) **EP 3 993 147 B1**
(45) Date de publication et mention de la délivrance du brevet: **01.07.2026**
(21) Numéro de dépôt: 21204669.2
(22) Date de dépôt: 26.10.2021
(51) Int. Cl.: H01M 50/216, H01M 50/202, H01M 50/247

(54) **BOÎTIER AVEC UNE PILE BOUTON ET UN SYSTÈME ANTI-RETRAIT DE LA PILE**
GEHÄUSE MIT KNOPFZELLENBATTERIE UND ENTNAHMESCHUTZSYSTEM FÜR DIESE BATTERIE
UNIT WITH A BUTTON CELL AND AN ANTI-REMOVAL SYSTEM FOR THE CELL

(30) Priorité: 28.10.2020 FR 2011053
(43) Date de publication de la demande: 04.05.2022
(73) Titulaire: Delta Dore, 35270 Bonnemain (FR)
(72) Inventeur: ROUXEL, Mickael, 35270 BONNEMAIN (FR)
(74) Mandataire: Cabinet Le Guen Maillet

(56) Documents cités:
- EP-A1- 3 534 339
- CN-U- 208 489 273
- FR-A1- 2 508 667

## Description

### DOMAINE TECHNIQUE

La présente invention concerne un boîtier, tel qu'une télécommande par exemple, qui contient une pile et un système anti-retrait de la pile.

### ETAT DE LA TECHNIQUE ANTERIEURE

De nombreux boîtiers, tels que les commandes, fonctionnent à l'aide d'une ou plusieurs piles bouton. Pour maintenir la pile bouton en place, le boîtier comporte classiquement un châssis et une trappe qui est fixée sur le châssis et qui s'ouvre pour permettre l'accès à ladite pile en vue de son remplacement par exemple.

Malgré le soin apporté aux moyens de fixation de la trappe sur le châssis, il est arrivé que des enfants arrivent à ouvrir la trappe et ont ainsi accès à la pile bouton. Dans le cas de jeunes enfants, il y a un risque d'ingestion de la pile bouton et il est donc nécessaire de mettre en place un système anti-retrait plus performant. Le document CN208489273U divulgue un système de l'état de la technique.

### EXPOSE DE L'INVENTION

Un objet de la présente invention est de proposer un boîtier avec une pile et un système anti-retrait de la pile.

A cet effet, est proposé un boîtier comportant :
- un châssis présentant un logement,
- une pile bouton logeant dans le logement et présentant un axe, et
- un système anti-retrait comportant une plaque, au moins deux pattes de fixation, où pour chaque patte de fixation, le châssis comporte une échancrure dans laquelle ladite patte de fixation s'introduit par déplacement du système anti-retrait parallèlement à l'axe, et une fente débouchant dans l'échancrure, et dans laquelle ladite patte de fixation s'introduit par rotation du système anti-retrait autour de l'axe,
le boîtier étant caractérisé en ce que le châssis présente en outre une marche basse et une marche haute, où la marche basse s'enfonce dans le châssis par rapport à la marche haute, et en ce que le système anti-retrait comporte en outre une languette flexible s'étendant radialement vers l'extérieur de la plaque, où la languette est sur la marche haute lorsque les pattes de fixation sont dans les échancrures et sur la marche basse lorsque les pattes de fixation sont dans les fentes.

Grâce à ce système anti-retrait qui nécessite le déverrouillage de la rotation, la pile bouton est difficilement accessible.

Avantageusement, le châssis comporte un évidement qui se situe à l'extérieur par rapport aux marches et la languette est suffisamment longue pour s'étendre au-dessus de l'évidement.

Avantageusement, la plaque comporte des reliefs.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de face d'un boîtier selon l'invention,
[Fig. 2] est une vue en perspective du boîtier de la Fig. 1,
[Fig. 3] est une vue de face d'un système anti-retrait selon l'invention, et
[Fig. 4] est une vue en perspective du système anti-retrait de la Fig. 3.

### EXPOSE DETAILLE DE MODES DE REALISATION

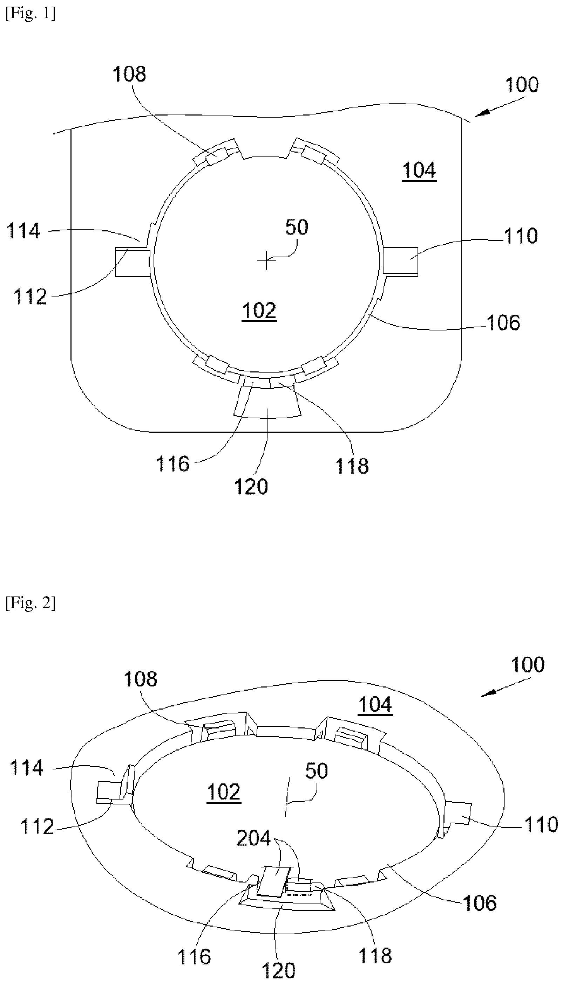

La Fig. 1 et la Fig. 2 montrent un boîtier 100 qui peut être tout type de boîtier contenant une pile bouton 102, comme par exemple une télécommande ou un interrupteur. Le boîtier 100 comporte un châssis 104 dans lequel est prévu un logement 106 pour loger la pile bouton 102 et un capot amovible (non représenté) qui se fixe de manière amovible au châssis 104 pour recouvrir la pile bouton 102.

La pile bouton 102 prend la forme d'un disque autour d'un axe 50.

La fixation du capot amovible est assurée par tous moyens appropriés comme des clips, par exemple.

Classiquement, le châssis 104 comporte des ergots 108 qui assurent un maintien de la pile bouton 102 dans le logement 106.

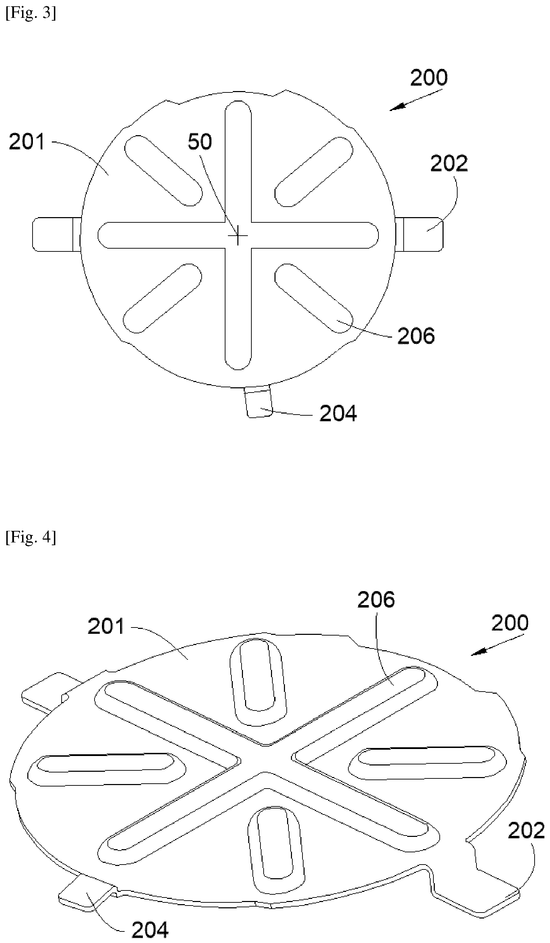

La Fig. 3 et la Fig. 4 montrent un système anti-retrait 200, préférentiellement métallique, qui comprend une plaque 201 et au moins deux pattes de fixation 202 solidaires de la plaque 201 et préférentiellement diamétralement opposées. Chaque patte de fixation 202 prend la forme d'un pli orienté vers le dessous et radialement vers l'extérieur de la plaque 201.

Pour chaque patte de fixation 202, le châssis 104 comporte une échancrure 110 dans laquelle ladite patte de fixation 202 s'introduit par déplacement parallèlement à l'axe 50 de la pile bouton 102.

Dans chaque échancrure 110 débouche une fente 112 et la fente 112 se trouve sous une partie 114 du châssis 104. La mise en place du système anti-retrait 200 consiste ainsi à introduire chaque patte de fixation 202 dans l'échancrure 110 associée par un déplacement parallèle à l'axe 50 de la pile bouton 102, puis à pivoter le système anti-retrait 200 autour de l'axe 50 de la pile bouton 102 pour introduire chaque patte de fixation 202 dans la fente 112 associée et ainsi bloquer chaque patte de fixation 202 sous la partie 114 du châssis 104.

La fixation du système anti-retrait 200 prend ainsi la forme d'une fixation par baïonnettes.

L'angle de rotation du système anti-retrait 200 est par exemple de l'ordre de 10° à 20°.

Le système anti-retrait 200 comporte également une languette 204 s'étendant radialement vers l'extérieur de la plaque 201. La languette 204 est flexible.

Le châssis 104 comporte également une marche basse 116 et une marche haute 118 voisine de la marche basse 116, où la marche basse 116 s'enfonce dans le châssis 104 par rapport à la marche haute 118. Les marches 116 et 118 sont à l'extérieur par rapport au logement 106.

La marche basse 116 prend la forme d'un enfoncement dans le châssis 104 parallèlement à l'axe 50 de la pile bouton 102. La marche basse 116 est délimitée angulairement entre deux parois du châssis 104 qui s' étendent parallèlement à l'axe de la pile bouton 102 depuis la marche basse 116 et dont l'une rejoint la marche haute 118.

Le procédé de mise en place du système anti-retrait 200 sur la pile bouton 102 et le châssis 104 consiste :
- à déplacer le système anti-retrait 200 parallèlement à l'axe 50 de la pile bouton 102 de manière à amener chaque patte de fixation 202 dans l'échancrure 110 associée, le système anti-retrait 200 est alors dans une position déverrouillée, et dans cette position déverrouillée, la languette 204 (vue en traits pointillés sur la Fig. 2) se positionne sur la marche haute 118 et est alors dans une position débloquée, et
- à déplacer le système anti-retrait 200 en rotation autour de l'axe 50 de la pile bouton 102 de manière à amener chaque patte de fixation 202 dans la fente associée 112, le système anti-retrait 200 passe ainsi de la position déverrouillée à une position verrouillée et en position verrouillée, la languette 204 (en traits pleins sur la Fig. 2) se positionne sur la marche basse 116, c'est-à-dire dans l'enfoncement et dans une position bloquée.

La languette 204 doit présenter une forme telle qu'elle est en pression contre les marches 116 et 118, et plus particulièrement contre la marche basse 116 en position bloquée.

Avant pivotement du système anti-retrait 200, c'est-à-dire en position déverrouillée et en position débloquée, la languette 204 est sur la marche haute 118 et peut donc librement se déplacer sur la marche haute 118 durant la rotation.

Après pivotement du système anti-retrait 200, c'est-à-dire en position verrouillée et en position bloquée, la languette 204 est en pression sur la marche basse 116 et est ainsi empêchée de pivoter de manière involontaire du fait de la présence des parois qui s'étendent de part et d'autre à partir de la marche basse 116.

Le déblocage du système anti-retrait 200 consiste à passer la languette 204 de la position bloquée à la position débloquée par soulèvement de la languette 204 au-dessus de la marche basse 116 et au moins à la hauteur de la marche haute 118. Le système anti-retrait 200 est alors libre de pivoter en sens inverse que précédemment, pour passer de la position verrouillée à la position déverrouillée en sortant chaque patte de fixation 202 de la fente associée 112. Il est alors possible de retirer le système anti-retrait 200 pour accéder à la pile bouton 102.

Ainsi, la languette 204 est sur la marche haute 118 lorsque les pattes de fixation 202 sont dans les échancrures 110 mais pas dans les fentes 112 et sur la marche basse 116 lorsque les pattes de fixation 202 sont dans les fentes 112 et donc plus dans les échancrures 110.

Le retrait du système anti-retrait 200 nécessite donc deux actions simultanées sur ledit système anti-retrait 200, à savoir le soulèvement de la languette 204 et la rotation du système anti-retrait 200, ce qui rend l'accès à la pile bouton 102 compliqué.

Le soulèvement de la languette 204 peut s'effectuer avec un outil, mais préférentiellement sans outil et uniquement avec un doigt.

En position verrouillée, les pattes de fixation 202 sont à l'intérieur du châssis 104 et ne sont donc pas directement accessibles, mais la languette 204 reste à l'extérieur du châssis 104 et reste toujours accessible.

Pour faciliter la prise de la languette 204, le châssis 104 comporte un évidement 120 qui se situe à l'extérieur par rapport aux marches 116 et 118 et la languette 204 est suffisamment longue pour s'étendre au-dessus de l'évidement 120.

Pour faciliter la prise en main du système anti-retrait 200 pour le pivoter, la plaque 201 comporte des reliefs 206.

## Revendications

1. Boîtier (100) comportant :
- un châssis (104) présentant un logement (106),
- une pile bouton (102) logeant dans le logement (106) et présentant un axe (50), et
- un système anti-retrait (200) comportant une plaque (201) et au moins deux pattes de fixation (202), où pour chaque patte de fixation (202), le châssis (104) comporte une échancrure (110) dans laquelle ladite patte de fixation (202) s'introduit par déplacement du système anti-retrait (200) parallèlement à l'axe (50), et une fente (112) débouchant dans l'échancrure (110), et dans laquelle ladite patte de fixation (202) s'introduit par rotation du système anti-retrait (200) autour de l'axe (50),
le boîtier (100) étant **caractérisé en ce que** le châssis (104) présente en outre une marche basse (116) et une marche haute (118), où la marche basse (116) s'enfonce dans le châssis (104) par rapport à la marche haute (118), et **en ce que** le système anti-retrait (200) comporte en outre une languette (204) flexible s'étendant radialement vers l'extérieur de la plaque (201) où la languette (204) est sur la marche haute (118) lorsque les pattes de fixation (202) sont dans les échancrures (110) et sur la marche basse (116) lorsque les pattes de fixation (202) sont dans les fentes (112).

2. Boîtier (100) selon la revendication 1, **caractérisé en ce que** le châssis (104) comporte un évidement (120) qui se situe à l'extérieur par rapport aux marches (116, 118) et **en ce que** la languette (204) est suffisamment longue pour s'étendre au-dessus de l'évidement (120).

3. Boîtier (100) selon l'une des revendications 1 ou 2, **caractérisé en ce que** la plaque (201) comporte des reliefs (206).

## Patentansprüche

1. Gehäuse (100), das Folgendes umfasst:
- ein Chassis (104), das eine Aufnahme (106) aufweist,
- eine Knopfbatterie (102), die in der Aufnahme (106) aufgenommen ist und eine Achse (50) aufweist, und
- ein Entnahmeschutzsystem (200), das eine Platte (201) und mindestens zwei Befestigungspratzen (202) umfasst, wobei das Chassis (104) für jede Befestigungspratze (202) einen Ausschnitt (110) umfasst, in den sich die Befestigungspratze (202) durch Verschiebung des Entnahmeschutzsystems (200) parallel zu der Achse (50) einfügt, und einen Schlitz (112), der in dem Ausschnitt (110) mündet, und wobei sich die Befestigungspratze (202) durch Drehung des Entnahmeschutzsystems (200) um die Achse (50) einfügt,
Gehäuse (100) **dadurch gekennzeichnet, dass** das Chassis (104) außerdem eine untere Stufe (116) und eine obere Stufe (118) aufweist, wobei sich die untere Stufe (116) in das Chassis (104) in Bezug auf die obere Stufe (118) vertieft, und dass das Entnahmeschutzsystem (200) außerdem eine biegsame Lasche (204) umfasst, die sich radial von der Platte (201) nach außen erstreckt, wobei sich die Lasche (204) auf der oberen Stufe (118) befindet, wenn sich die Befestigungspratzen (202) in den Ausschnitten (110) befinden, und auf der unteren Stufe (116), wenn sich die Befestigungspratzen (202) in den Schlitzen (112) befinden.

2. Gehäuse (100) nach Anspruch 1, **dadurch gekennzeichnet, dass** das Chassis (104) eine Aussparung (120) umfasst, die sich außerhalb in Bezug auf die Stufen (116, 118) befindet, und dass die Lasche (204) ausreichend lang ist, um sich oberhalb der Aussparung (120) zu erstrecken.

3. Gehäuse (100) nach einem der Ansprüche 1 oder 2, **dadurch gekennzeichnet, dass** die Platte (201) Reliefs (206) umfasst.

## Claims

1. Unit (100) comprising:
- a frame (104) having a housing (106),
- a button cell (102) housed in the housing (106) and having an axis (50), and
- an anti-removal system (200) comprising a plate (201) and at least two securing lugs (202), wherein, for each securing lug (202), the frame (104) comprises a notch (110) in which said securing lug (202) is introduced by moving the anti-removal system (200) parallel to the axis (50), and a slot (112) emerging in the notch (110), and into which said securing lug (202) is introduced by rotating the anti-removal system (200) about the axis (50),
the unit (100) being **characterised in that** the frame (104) furthermore has a low step (116) and a high step (118), wherein the low step is sunk into the frame (104) with respect to the high step (118), and **in that** the anti-removal system (200) furthermore comprises a flexible tongue (204) extending radially towards the outside of the plate (201), where the tongue (204) is on the high step (118) when the securing lugs (202) are in the notches (110) and on the low step (116) when the securing lugs (202) are in the slots (112).

2. Unit (100) according to claim 1, **characterised in that** the frame (104) comprises a recess (120) that is located towards the outside with respect to the steps (116, 118) and **in that** the tongue (204) is sufficiently long to extend above the recess (120).

3. Unit (100) according to one of claims 1 or 2, **characterised in that** the plate (201) comprises reliefs (206).
